(19) Europäisches Patentamt
European Patent Office
Office européen des brevets

(11) Publication number: **0 135 381**
**B1**

(12) **EUROPEAN PATENT SPECIFICATION**

(45) Date of publication of patent specification: **28.01.87**

(51) Int. Cl.$^4$: **C 09 B 62/022**, D 06 P 3/66

(21) Application number: **84305782.9**

(22) Date of filing: **23.08.84**

(54) **Reactive dyes.**

(30) Priority: **22.09.83 GB 8325409**

(43) Date of publication of application:
**27.03.85 Bulletin 85/13**

(45) Publication of the grant of the patent:
**28.01.87 Bulletin 87/05**

(84) Designated Contracting States:
**CH DE FR GB IT LI**

(56) References cited:
**GB-A- 938 870**
**GB-A-1 450 746**
**US-A-3 122 531**

(73) Proprietor: **IMPERIAL CHEMICAL INDUSTRIES PLC**
**Imperial Chemical House Millbank**
**London SW1P 3JF (GB)**

(72) Inventor: **McClelland, Robert David**
**131 Warwick Road Alkrington**
**Middleton Manchester M24 1HZ (GB)**
Inventor: **Renfrew, Andrew Hunter Morris**
**3 Warwick Close Greenmount**
**Bury Lancashire BL8 4EF (GB)**

(74) Representative: **Stephenson, Kenneth et al**
**Imperial Chemical Industries PLC**
**Legal Department: Patents**
**PO Box 6 Bessemer Road**
**Welwyn Garden City Herts, AL7 1HD (GB)**

**EP 0 135 381 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to reactive dyes in particular to such dyes of the triphenodioxazine series.

UK Patent 1450746 describes a valuable class of triphenodioxazine dyestuffs including reactive dyes. We have now discovered that a novel sub-class of the dyes described in GB—A—1450746 has unexpected and valuable properties. These dyes are characterised by having triazinyl or pyrimidinyl groups to which sulphonic acid groups are attached. Notwithstanding that it would be expected that the sulphonic acid groups could contribute to the water solubility of the dyestuffs, the solubilities of the dyes of the invention are unexpectedly high e.g. they may be several fold greater than the corresponding chlorotriazinyl or dichloropyrimidinyl dyes. The new dyes are thus valuable for the manufacture of concentrated aqueous solutions which are desirable to avoid the various hazards associated with the handling of dusty dyestuff powders.

According to the present invention, there are provided triphenodioxazine dyes which in the free acid form are dyes of the formula:

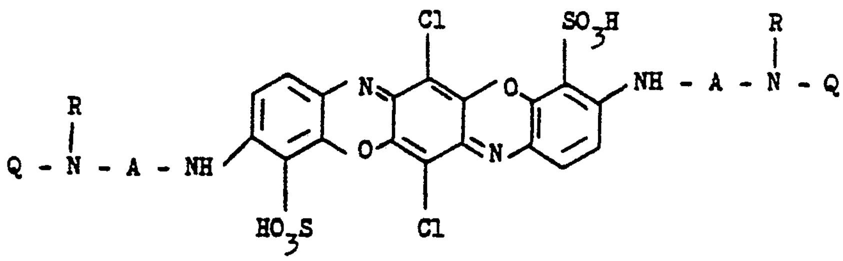

(1)

wherein

Q represents a cellulose-reactive group of the formula:

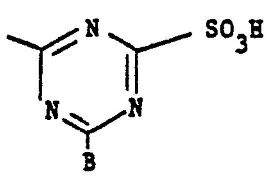

or

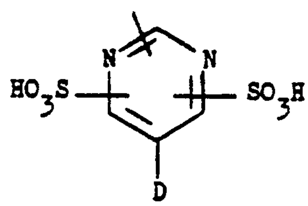

B represents an optionally substituted alkoxy, optionally substituted phenylamino or sulphonated naphthylamino radical;

D represents Cl or CN;

A represents a $C_2$—$C_6$ alkylene group optionally substituted by —OH or —$OSO_3H$; and

R represents H or $C_{1-4}$ alkyl optionally substituted by —CN, —$SO_3H$, —COOH, —OH or —$OSO_3H$.

The preferred dyes of formula (1) have one or more of the following features.

(1) A is —$CH_2CH_2$—, —$CH_2CHCH_3$—, —$CH_2CH_2CH_2$—, —$CH_2CHOHCH_2$— or —$CH_2CH(OSO_3H)CH_2$—.

(2) R is $CH_3$, $C_2H_5$, beta-carboxyethyl, beta-hydroxyethyl, beta-cyanoethyl or omega-sulphomethyl and especially H.

(3) Q is a disulphopyrimidinyl radical in which D is cyano or a sulphotriazinyl radical in which B is $C_{1-4}$ alkoxy optionally substituted by $C_{1-4}$ alkoxy and especially naphthylamino substituted by 1, 2 or 3 $SO_3H$ and optionally substituted phenylamino of the formula:

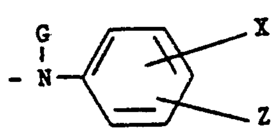

(2)

where G = H, methyl, ethyl, omega-sulphomethyl, beta-carboxy-, beta-hydroxy- or beta-cyanoethyl and Z and X are each independently selected from H, COOH, $SO_3H$, $CH_3$, $C_2H_5$, $OCH_3$, $OC_2H_5$, Cl, Br, CN, $NO_2$, $NHCOCH_3$ or beta-sulphatoethylsulphonyl.

Especially preferred groups of formula (2) are those in which Z is $SO_3H$ and X is $CH_3$, $OCH_3$ and especially H or $SO_3H$.

As specific examples of the groups B there may be mentioned:

methoxy
ethoxy
beta-methoxyethoxy
beta-ethoxyethoxy

o-, m- or p-sulphoanilino
o-, m- and p-carboxyanilino
4- and 5-sulpho-2-carboxyanilino
4- and 5-sulpho-o-tolylamino
2,4-, 2,5- and 3,5-disulphoanilino
2,4-dicarboxyanilino
4- and 5-sulpho-2-methoxyanilino
N-methyl-o-, m- and p-sulphoanilino
N-omega-sulphomethylanilino
N-(beta-hydroxyethyl)-3-sulphoanilino.

The dyes of formula (1) may be manufactured by reacting dyestuffs of the formula:

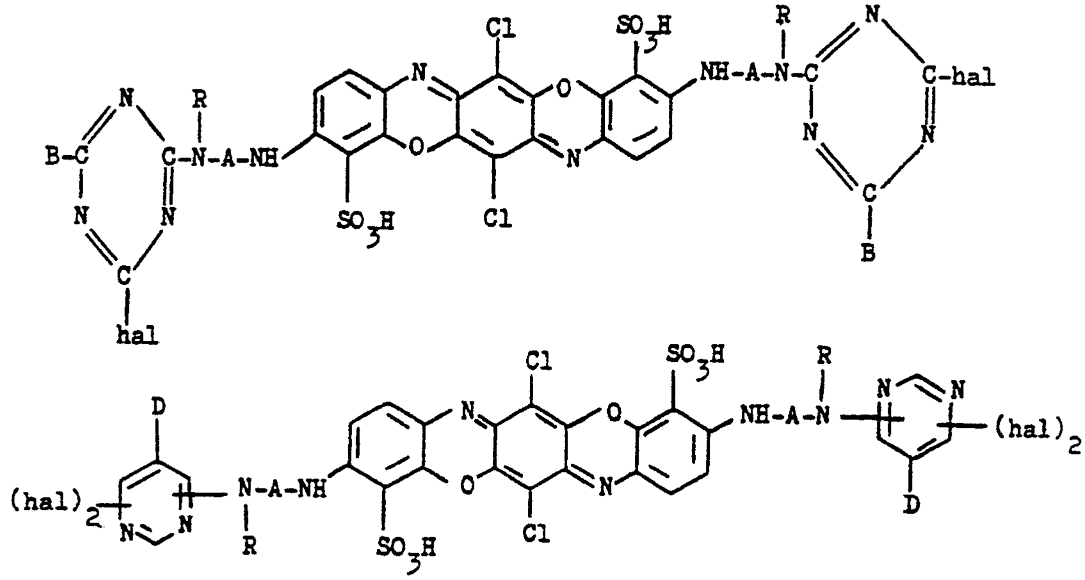

(3)

or

(4)

where A, R, B and D have the meanings given above and hal is F, Br or especially Cl, with a metal sulphite in aqueous solution.

This reaction is usually carried out at a temperature in the range 20—100°C. The metal sulphite is conveniently an alkali metal sulphite such as sodium sulphite.

The dyes of formula (1) may also be manufactured by reacting a compound of the formula:

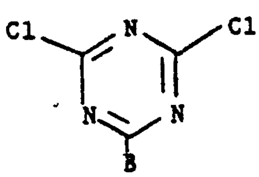

or

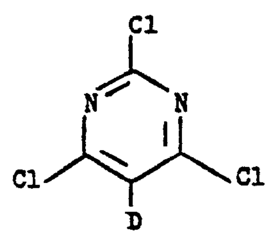

wherein B and D have the meanings given above with a metal sulphite in aqueous solution and reacting the resulting sulphonated triazine or pyrimidine compound in aqueous solution with a triphenodioxazine compound of the formula:

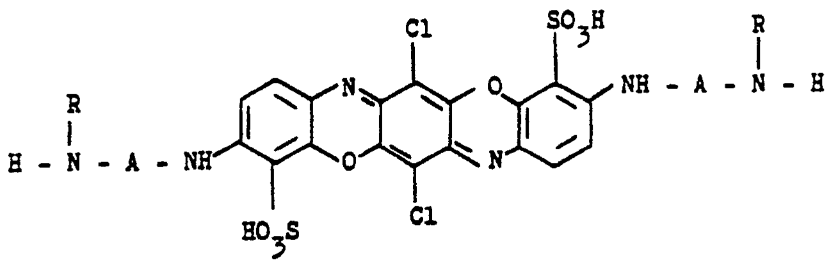

(5)

wherein A and R have the meanings given above.

Thus, a dichlorotriazine compound may be reacted with aqueous sodium sulphite at about 0°C, the resulting solution of disulphotriazine compound then being reacted with a triphenodioxazine compound of formula (5) at a slightly higher temperature, for example 5—15°C. Similarly, trichlorocyanopyrimidine or tetrachloropyrimidine may be reacted with aqueous sodium sulphite at about 0—5°C in the presence of a triphenodioxazine compound of formula (5).

The halotriazinyl dye of formula (3) may be obtained by methods described in GB—A—1450746 and the pyrimidinyl analogues may be obtained similarly.

The dyes of formula (1) may be isolated by any conventional means as spray drying or salting out. The dyes may also be used without isolation and isolated dyes may be redissolved in aqueous solvent without drying to avoid the dust problems of dry dyestuffs powders. The original reaction media or the solutions of redissolved dyes may be purified by removal of inorganic salts by membrane techniques such as reverse osmosis.

The sulphonic acid groups shown in the free acid form in formula (1) will usually be present in the form of salts e.g. sodium salts.

The dyestuffs of the present invention may be used for colouring a wide range of textile materials containing hydroxyl or amino groups, e.g. wool, silk, synthetic polyamides and natural or regenerated cellulose, for example cotton or viscose rayon materials, by conventional methods used for colouring such materials with water-soluble reactive dyes, e.g. in the case of cellulose they are preferably applied in conjunction with a treatment with an acid binding agent, e.g. caustic soda, sodium carbonate, phosphate, silicate or bicarbonate, which may be applied to the cellulose textile materials before, during or after the application of the dyestuff.

The dyes of the present invention are valuable reactive dyes for cellulose. They yield coloured textiles with good resistance to washing and light and are usually characterised by good strength and an ability to build-up to high depths of shade. They have high levels of water solubility and may be handled and stored as aqueous solutions at mildly acid to neutral pH values.

The invention is illustrated by the following Examples in which all parts and percentages are by weight. The term "MI" indicates the weight of the material containing one mole of pure compound.

### Example 1

To 137 parts of 3,10-bis-(4-chloro-6-2′,4′-disulphoanilino-*s*-triazin-2-ylaminoethylamino)-6,13-dichloro-4,11-disulphotriphenodioxazine (MI.2740) in 1500 parts of water were added 75.6 parts of sodium sulphite. The reaction mixture was heated at 80° for 1 hour, salted to 20% with sodium chloride and cooled to room temperature. Filtration gave 65 parts of sulphited product, λmax 620 nm having the structure given by formula (1) with A = $CH_2CH_2$, R = H and Q = 4(2,4-disulphoanilino)-6-sulpho-*s*-triazin-2-yl.

### Example 2

To 35.8 parts of 3,10-bis-(4-chloro-6-N-sulphomethylanilino-*s*-triazin-2-ylaminoethylamino)-6,13-dichloro-4,11-disulphotriphenodioxazine (MI 3580) in 500 parts of water were added 5 parts of sodium sulphite. The reaction mixture was heated at 50—60°C for 6 hours, salted to 20% with potassium chloride and cooled to room temperature. Filtration gave 18 parts of sulphited product, λmax 620 nm having the structure given by formula (1) with A = $CH_2CH_2$, R = H and Q = 4(N-sulphomethylamino)-6-sulpho-*s*-triazin-2-yl.

### Example 3

To 54 parts of 3,10-bis-aminoethylamino-6,13-dichloro-4,11-disulphotriphenodioxazine (MI 2691) was added a solution of 14 parts of dichlorotriazinylorthanilic acid in 250 parts of water at pH 9 and 35°C. The reaction mixture was stirred for 3 hours using sodium hydroxide solution to keep the pH steady. 50 Parts of sodium sulphite were added and the reaction mixture heated to 70° for 3 hours, salted to 20% with sodium chloride and cooled to room temperature. Filtration gave 36 parts of sulphited product, λmax 622 nm, having the structure given by formula (1) with A = $CH_2CH_2$, R = H, and Q = 4(2-sulphoanilino)-6-sulpho-*s*-triazin-2-yl.

### Example 4

To 43 parts of metanilic acid (MI 432) in 350 parts of water were added 18.9 parts of cyanuric chloride at 0—5°C, pH 6—7 and the reaction mixture stirred for 1 hour. 19 Parts of sodium sulphite in 150 parts of water were added and followed after ½ hour by 62.5 parts of 3,10-bis-aminoethylamino-6,13-dichloro-4,11-disulphotriphenodioxazine (MI 2500). The reaction mixture was stirred at 10—15° for 8 hours, pH 9—9.5, salted to 20% with sodium chloride and filtered off to give the product. λmax 620 nm, having the structure given by formula (1), with A = $CH_2CH_2$, R = H and Q = 4(m-sulphoanilino)-6-sulpho-*s*-triazin-2-yl.

### Example 5

To 8 parts of dichloromethoxytriazine in 200 parts of water at 0°C were added 10 parts of sodium sulphite. After 10 minutes 52 parts of 3,10-bis-aminoethylamino-6,13-dichloro-4,11-disulphotriphenodioxazine (MI 2600) were added and the reaction mixture stirred at 10—15°, pH 9—9.5 for 2 hours, salted to 20% with sodium chloride and filtered off to give the product, λmax 624 nm, having the structure given by formula (1) with A = $CH_2CH_2$, R = H and Q = 4-methoxy-6-sulpho-*s*-triazin-2-yl.

Example 6

To 56 parts of 3,10-bis-aminoethylamino-6,13-dichloro-4,11-disulphotriphenodioxazine (MI 2802) and 50 parts of urea in 500 parts of water at pH 9—9.5 were added 10 parts of cyanotrichloropyrimidine. The mixture was stirred at room temperature, pH 9—9.5 for 2 hours to give a thick porridge. 35 Parts of sodium sulphite in 200 parts of water were added, the reaction mixture stirred for 35°C for 6 hours, salted to 20% with potassium chloride and cooled to room temperature. Filtration gave 22 parts of sulphited product, λmax 620 nm, having the structure given by formula (1) with A = $CH_2CH_2$, R = H and Q = cyanodisulphopyridiminyl.

Example 7

To 25 parts of 3,10-bis-aminoethylamino-6,13-dichloro-4,11-disulphotriphenodioxazine (MI 2500) were added 20 parts of sodium sulphite and 400 parts of water. The mixture was cooled to 0°C, pH 9.5, and 5 parts of cyanotrichloropyrimidine added in 20 parts of acetone. The stirring for 1 hour gave the desired sulphited product, λmax 620 nm, identical to that obtained by the method of Example 6. Salting to 20% with potassium chloride and filtration gave 15 parts of dyestuff.

The same invention is further exemplified by the Examples shown in Tables 1 and 2, the dyes being made by the methods described in Examples 1—7.

TABLE 1

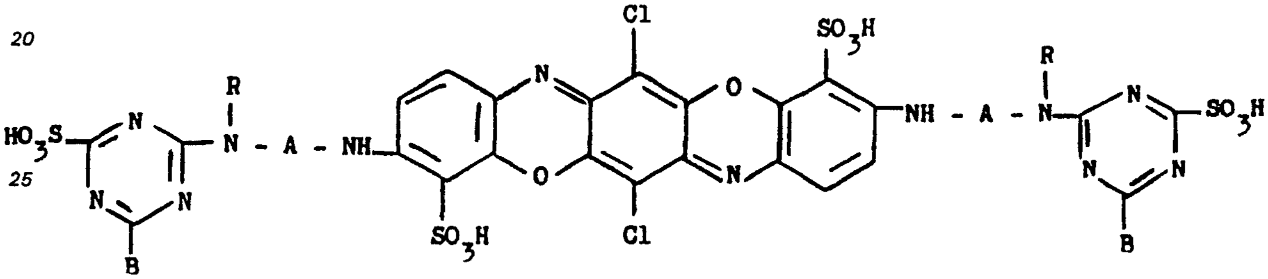

| Example | A | R | B | λ max |
|---|---|---|---|---|
| 8 | $-CH_2-CH_2-$ | H | 2,5-disulphoanilino | 622 |
| 9 | $-CH_2-CH_2-$ | H | p-carboxyanilino | 620 |
| 10 | $-CH_2-CH_2-$ | H | 4-sulpho-o-toluidine | 620 |
| 11 | $-CH_2-CH_2-$ | H | 1,5-disulphonaphthylamino | 624 |
| 12 | $-CH_2-CH_2-$ | H | anilino | 620 |
| 13 | $-CH_2-CH_2-$ | $-C_2H_4OH$ | methoxy | 621 |
| 14 | $-CH_2-CH_2-$ | $-C_2H_4OSO_3H$ | m-sulphoanilino | 622 |
| 15 | $-CH_2-CH_2-$ | $-C_2H_4OSO_3H$ | o-sulphoanilino | 625 |
| 16 | $-(CH_2)_3-$ | H | methoxy | 620 |
| 17 | $-(CH_2)_3-$ | H | 2,5-disulphoanilino | 623 |
| 18 | $-(CH_2)_3-$ | H | o-toluidino | 620 |
| 19 | $-CH_2-CH_2-$ | $-C_2H_4CN$ | m-sulphoanilino | 620 |
| 20 | $-CH_2-CH_2-$ | H | m-sulphatoethylsulphonylanilino | 620 |
| 21 | $-CH_2-CH_2-$ | H | p-sulphatoethylsulphonylanilino | 621 |

TABLE 2

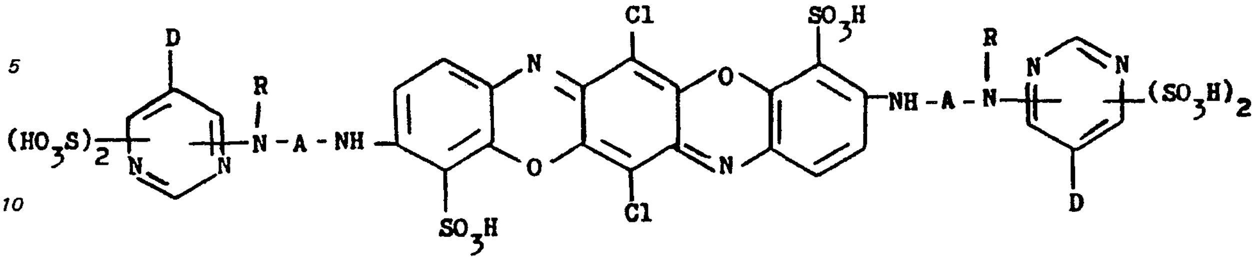

| Example | A | R | D | λ max |
|---|---|---|---|---|
| 22 | $-CH_2-CH_2-$ | H | chloro | 624 |
| 23 | $-CH_2-CH_2-$ | $-C_2H_4OH$ | cyano | 620 |
| 24 | $-(CH_2)_3-$ | H | cyano | 620 |
| 25 | $-(CH_2)_3-$ | H | chloro | 622 |
| 26 | $-(CH_2)_3-$ | $-C_2H_4OH$ | cyano | 620 |

## Claims

1. A triphenodioxazine dye which, in the free acid form, has the formula:

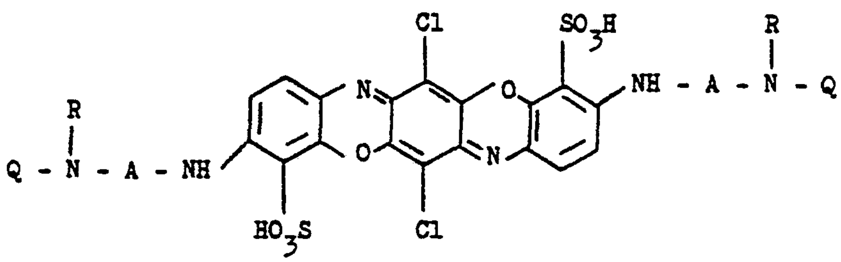

wherein

Q represents a cellulose-reactive group of the formula:

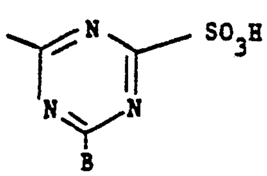

or

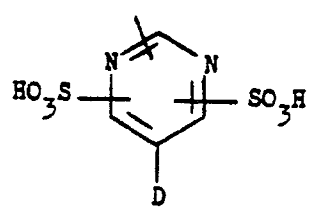

B represents an optionally substituted alkoxy, optionally substituted phenylamino or sulphonated naphthylamino radical;

D represents Cl or CN;

A represents a $C_2$—$C_6$ alkylene group optionally substituted by —OH or —$OSO_3H$; and

R represents H or $C_{1-4}$ alkyl optionally substituted by —CN, —$SO_3H$, —COOH, —OH or —$OSO_3H$.

2. A triphenodioxazine dye according to claim 1 wherein A is —$CH_2CH_2$—, —$CH_2CHCH_3$—, —$CH_2CH_2CH_2$—, —$CH_2CHOHCH_2$— or —$CH_2CH(OSO_3H)CH_2$—.

3. A triphenodioxazine dye according to claim 1 or claim 2 wherein R is H, —$CH_3$, —$C_2H_5$, beta-carboxyethyl, beta-hydroxyethyl, beta-cyanoethyl or omega-sulphomethyl.

4. A method for the preparation of a triphenodioxazine dye as defined in claim 1 which comprises reacting a metal sulphite in aqueous solution with a dye of the formula:

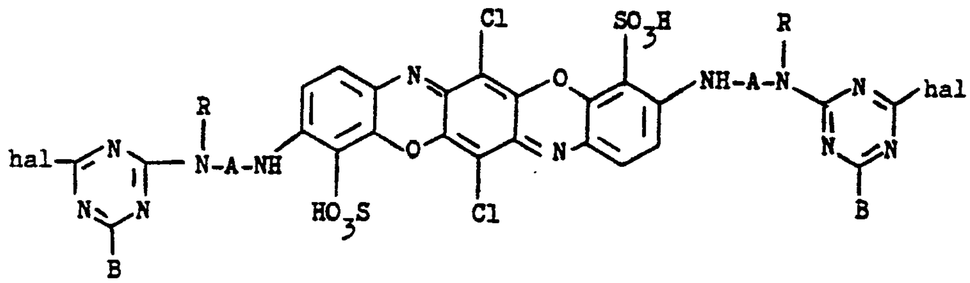

or of the formula:

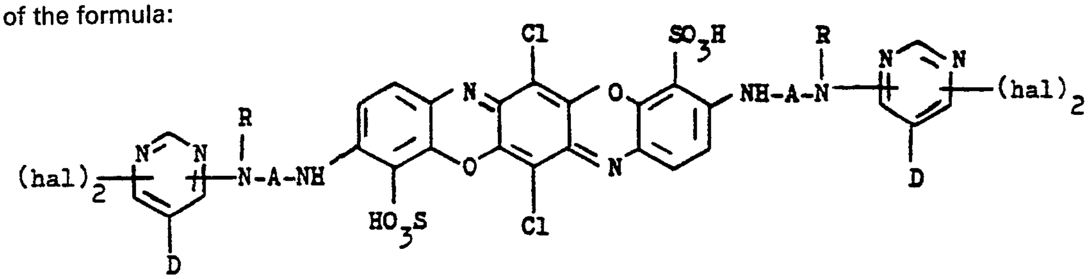

wherein A, R, B and D have the meanings given in claim 1 and hal represents Cl, Br or F.

5. A method for the preparation of a triphenodioxazine dye as defined in claim 1 which comprises reacting a compound of the formula:

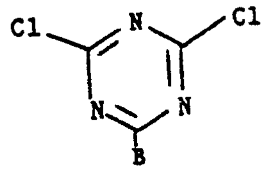

or

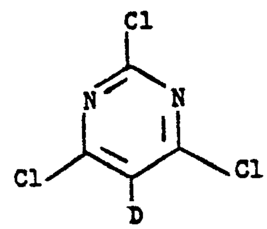

wherein B and D have the meanings given in claim 1, with a metal sulphite in aqueous solution and reacting the resulting sulphonated triazine or pyrimidine compound in aqueous solution with a triphenodioxazine compound of the formula:

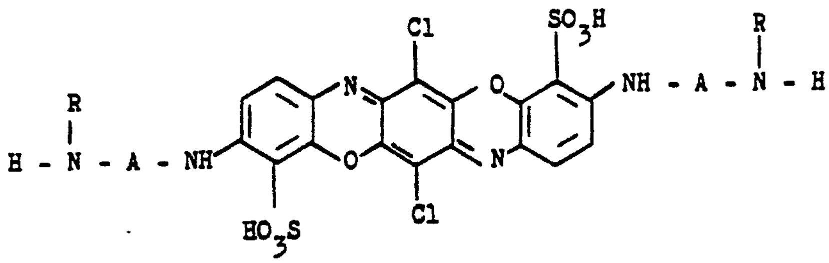

(5)

wherein A and R have the meanings given in claim 1.

6. A dyeing or printing process wherein a triphenodioxazine dye as defined in claim 1 is used.

7. A process according to claim 6 wherein the dye is applied to cellulose textile material in conjunction with an acid-binding agent.

**Patentansprüche**

1. Triphenodioxazin-Farbstoff, welcher in Form der freien Säure die Formel

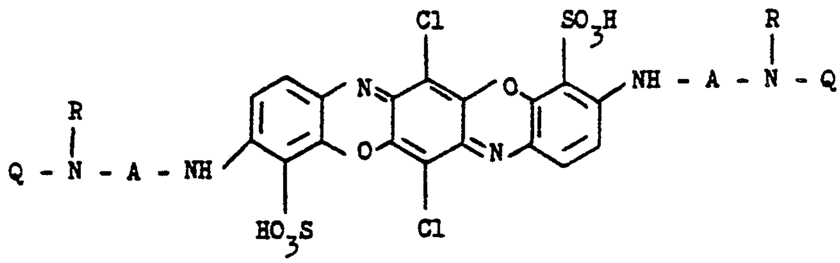

aufweist, worin

Q für eine mit Cellulose reaktive Gruppe der Formel

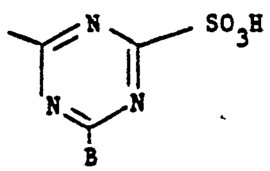

oder

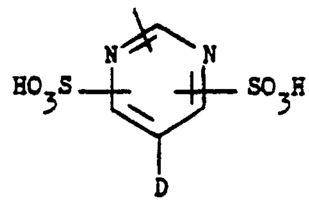

steht,

B für ein gegebenenfalls substituiertes Alkoxy-, gegebenenfalls substituiertes Phenylamino- oder sulfoniertes Naphthylaminoradikal steht;

D für Cl oder CN steht;

A für eine $C_2$—$C_6$-Alkylengruppe steht, die gegebenenfalls durch —OH oder —$OSO_3H$ substituiert ist; und

R für H oder $C_1$—$C_4$-Alkyl steht, das gegebenenfalls durch —CN, —$SO_3H$, —COOH, —OH oder —$OSO_3H$ substituiert ist.

2. Triphenodioxazin-Farbstoff nach Anspruch 1, worin A für —$CH_2CH$—, —$CH_2CHCH_3$—, —$CH_2CH_2CH_2$—, —$CH_2CHOHCH_2$— oder —$CH_2CH(OSO_3H)CH_2$— steht.

3. Triphenodioxazin-Farbstoff nach Anspruch 1 oder 2, worin R für H, —$CH_3$, —$C_2H_5$, beta-Carboxyethyl, beta-Hydroxyethyl, beta-Cyanoethyl oder omega-Sulfomethyl steht.

4. Verfharen zur Herstellung eines Triphenodioxazin-Farbstoffs nach Anspruch 1, bei welchem ein Metallsulfit in wäßriger Lösung mit einem Farbstoff der Formel

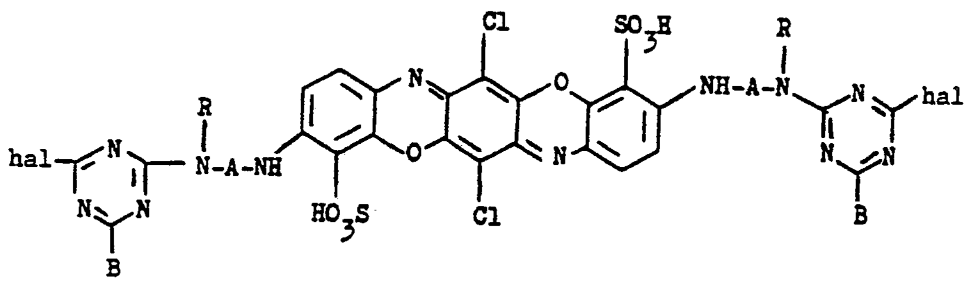

oder der Formel

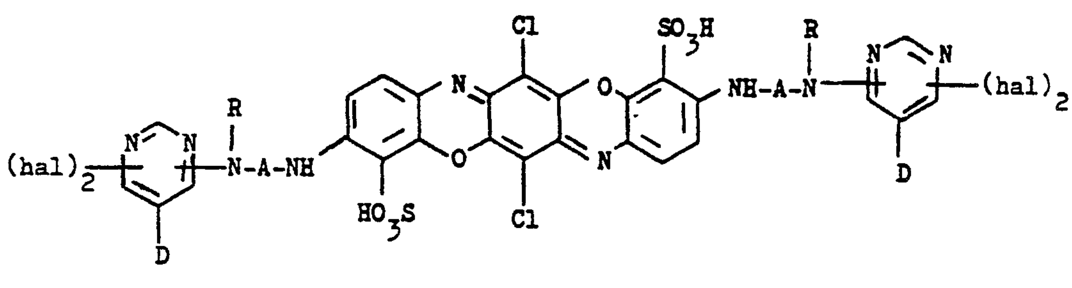

umgesetzt wird, wobei A, R, B und D die in Anspruch 1 angegebenen Bedeutungen besitzen und hal für Cl, Br oder F steht.

5. Verfahren zur Herstellung eines Triphenodioxazin-Farbstoffs nach Anspruch 1, bei welchem eine Verbindung der Formel

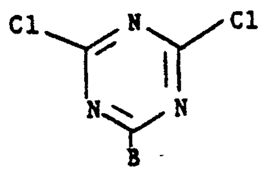

oder

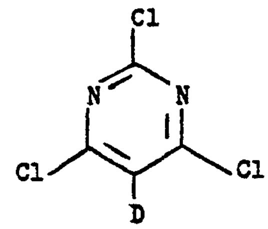

worin B und D die in Anspruch 1 angegebenen Bedeutungen besitzen, in wäßriger Lösung mit einem Metallsulfit umgesetzt wird und hierauf die erhaltene sulfonierte Triazin- oder Pyrimidinverbindung in wäßriger Lösung mit einer Triphenodioxazinverbindung der Formel

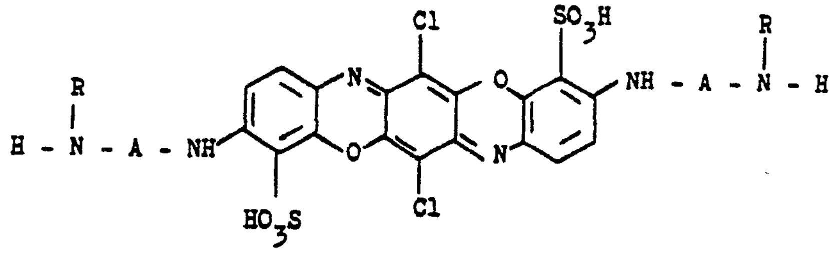

worin A und R die in Anspruch 1 angegebenen Bedeutungen besitzen, umgesetzt wird.

6. Färbe- oder Druckverfahren, bei welchem ein Triphenodioxazin-Farbstoff nach Anspruch 1 verwendet wird.

7. Verfahren nach Anspruch 6, bei welchem der Farbstoff auf das Cellulosetextilmaterial gemeinsam mit einem säurebindenden Mittel aufgebracht wird.

**Revendications**

1. Colorant triphénodioxazinique qui, sous la forme acide libre, répond à la formule:

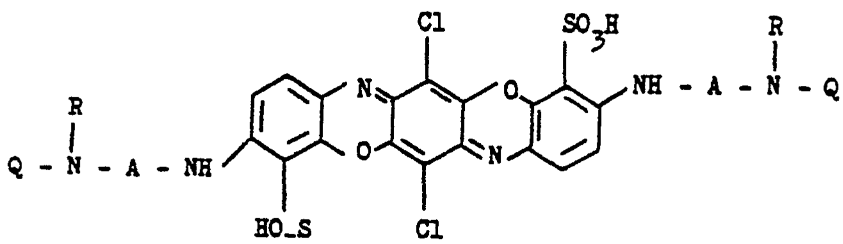

(1)

dans laquelle

Q représente un groupe réactif envers la cellulose, de formule:

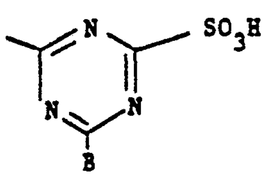

ou

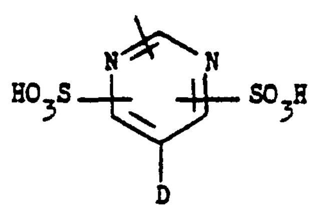

B représente un radical alkoxy facultativement substitué, phénylamino facultativement substitué ou naphtylamino sulfoné;

D représente Cl ou CN;

A représente un groupe alkylène en $C_2$ à $C_6$ facultativement substitué par $—OH$ ou $—OSO_3H$; et

R représente H ou un radical alkyle en $C_1$ à $C_4$ facultativement substitué par un groupe $—CN$, $—SO_3H$, $—COOH$, $—OH$ ou $—OSO_3H$.

2. Colorant triphénodioxazinique suivant la revendication 1, dans lequel A représente $—CH_2CH_2—$, $—CH_2CHCH_3—$, $—CH_2CH_2CH_2—$, $—CH_2CHOHCH_2—$ ou $—CH_2CH(OSO_3H)CH_2—$.

3. Colorant triphénodioxazinique suivant la revendication 1 ou la revendication 2, dans lequel R représente H, $—CH_3$, $—C_2H_5$, un groupe bêta-carboxyéthyle, bêta-hydroxyéthyle, bêta-cyanéthyle ou oméga-sulfométhyle.

4. Procédé de préparation d'un colorant triphénodioxazinique suivant la revendication 1, qui consiste à faire réagir un sulfite métallique en solution aqueuse avec un colorant de formule:

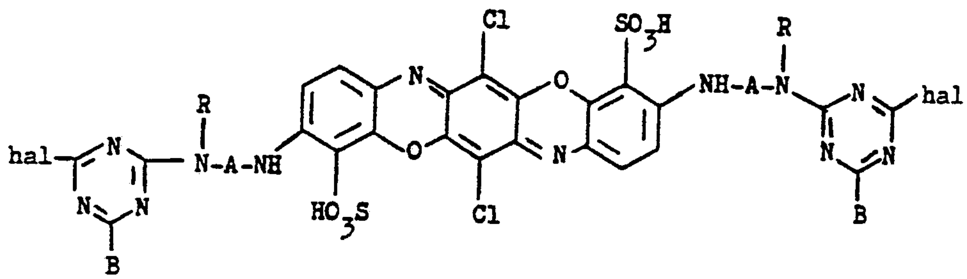

ou de formule:

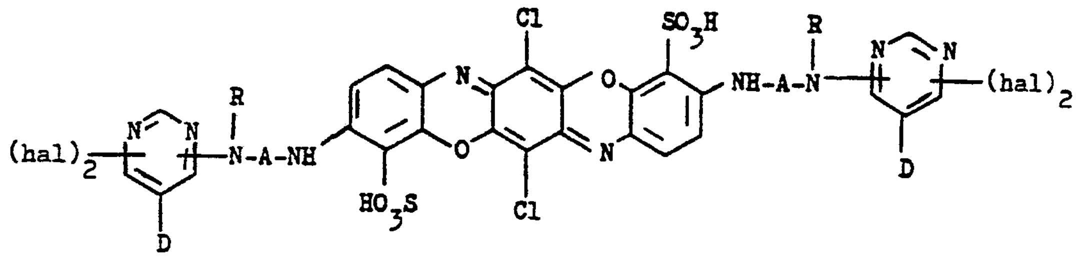

formules dans lesquelles A, R, B et D ont les définitions données dans la revendication 1 et Hal représente Cl, Br ou F.

5. Procédé de préparation d'un colorant triphénodioxazinique suivant la revendication 1, qui consiste à faire réagir un composé de formule:

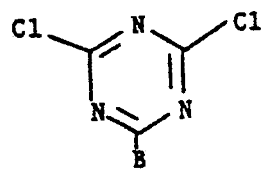

ou

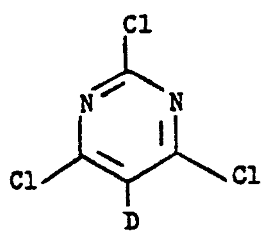

dans laquelle B et D ont les définitions données dans la revendication 1, avec un sulfite métallique en solution aqueuse et à faire réagir le composé triazinique ou pyrimidique sulfoné résultant en solution aqueuse avec un composé triphénodioxazinique de formule:

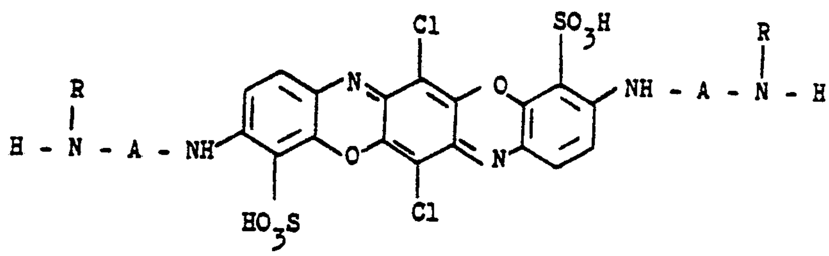

dans laquelle A et R ont les définitions données dans la revendication 1.

6. Procédé de teinture ou d'impression, dans lequel est utilisé un colorant triphénodioxazinique tel que défini dans la revendication 1.

7. Procédé suivant la revendication 6, dans lequel le colorant est appliqué à une matière textile cellulosique conjointement avec un accepteur d'acide.